# FASCICULE DE BREVET EUROPEEN

(11) **EP 1 663 672 B1**
(45) Date de publication et mention de la délivrance du brevet: **24.06.2009**
(21) Numéro de dépôt: 04765002.3
(22) Date de dépôt: 09.09.2004
(51) Int. Cl.: B60C 15/00

(54) **PNEUMATIQUE A MOBILITE ETENDUE AVEC BOURRELETS AGENCES DE FACON ASYMETRIQUE**
REIFEN MIT ERWEITETER MOBILITÄT MIT ASYMMETRISCH ANGEORDNETEN WÜLSTEN
TYRE WITH EXTENDED MOBILITY WITH ASYMMETRICALLY ARRANGED BEADS

(30) Priorité: 18.09.2003 FR 0310990
(43) Date de publication de la demande: 07.06.2006
(73) Titulaire: Société de Technologie Michelin, 63000 Clermont-Ferrand (FR); Michelin Recherche et Technique S.A., 1763 Granges-Paccot (CH)
(72) Inventeur: GUERINON, Bernard, F-63100 Clermont-Ferrand (FR); ANDERSON, James, Robert, Simpsonville, SC 29681 (US); JARDINE, David, F-63000 Clermont-Ferrand (FR); DRIEUX, Jean-Jacques, F-63530 Volvic (FR)
(74) Mandataire: Dequire, Philippe Jean-Marie Denis
(86) Numéro de dépôt international: PCT/EP2004/010067
(87) Numéro de publication internationale: WO 2005/025896

(56) Documents cités:
- WO-A-01/39999
- US-A1- 2002 179 216

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure, des flancs de hauteurs inégales et des zones d'ancrages spécifiques pour chacun des flancs. Ce type de conception est particulièrement adapté aux nouvelles générations de pneumatiques pouvant être utilisés, dans certaines limites, dans des conditions de faible pression, voire de pression nulle ou quasi-nulle, avec une réduction du risque de désolidarisation du pneu de la jante sur laquelle il est monté. Ce concept est souvent désigné par l'expression "mobilité étendue".

Depuis longtemps les fabricants de pneumatiques tentent de mettre au point un pneumatique présentant un minimum de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets risquent fortement de se désolidariser du pourtour de la jante contre lequel ils étaient maintenus par la pression.

De nombreuses solutions ont été testées afin de pallier ces inconvénients. Souvent ces solutions engendrent des difficultés supplémentaires au niveau du montage et du démontage du pneu sur la jante.

Par ailleurs, la fonction serrage du pneumatique sur la jante est une fonction essentielle pour assurer les qualités du pneumatique en fonctionnement. En effet, elle agit directement ou indirectement sur de multiples aspects tels le montage (parfois désigné « clipsage ») ou fixation du pneumatique, l'étanchéité du pneumatique, la rotation sur jante, etc. Ces fonctions sont toutes critiques et nécessitent des caractéristiques spécifiques et une fabrication rigoureuse des produits, en particulier si des standards de qualité élevés sont recherchés. Hors, les jantes et les pneumatiques ont souvent, pour un même code, des dimensions légèrement différentes, principalement dues aux tolérances de fabrication. Ces variations de dimensions compliquent le respect des différentes fonctions préalablement énumérées.

Pour remplir ces fonctions, on utilise industriellement deux grands types de solutions. Tout d'abord, pour les pneumatiques traditionnels, la tringle assure simultanément toutes ces fonctions.

Plus récemment, pour plusieurs types de produits manufacturés par la demanderesse, la tringle classique est remplacée par une zone d'ancrage comportant notamment des arrangements de fils circonférentiels coopérant avec la structure de renfort de type carcasse via un mélange d'ancrage ou de liaison. Là encore, la zone d'ancrage assure toutes les fonctions présentées ci-dessus.

Dans ces deux cas, il est toutefois difficile d'optimiser certains paramètres, car très souvent, l'amélioration de l'un, se fait au détriment d'un autre. Ce jeu de compromis entre gain d'un côté et pénalisation d'un autre, comporte donc certaines limites, puisqu'il est souvent difficile de tolérer de moins bonnes performances pour certains aspects.

Le document EP 0 582 196 présent un pneumatique comportant une bande de roulement prolongée par deux flancs et deux bourrelets ainsi qu'une carcasse ancrée dans les deux bourrelets à un renforcement annulaire. La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire. Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité. Ce mode de réalisation est destiné aux pneumatiques de type classique, avec maintien des bourrelets contre le crochet de jante dû à la pression de gonflage du pneumatique. On retrouve dans ce type d'agencement une prédominance d'efforts de type latéral ou axial, induisant d'importantes forces de compression agissant sensiblement axialement depuis les parois vers le centre dudit bourrelet. Ces forces augmentent en fonction de la pression de gonflage. L'augmentation de la pression tend à faire glisser le bourrelet contre le crochet, radialement vers l'extérieur. Les efforts induits radialement vers l'intérieur, contre le siège de la jante, diminuent avec l'augmentation de la pression, ou avec toute augmentation de la tension de la structure de renfort de type carcasse.

On remarque par ailleurs que les piles de fils sont alignées dans un sens sensiblement parallèle à l'orientation du profil du crochet de jante contre lequel le bourrelet s'appuie. Le profil du bourrelet de ce type de pneumatique est relativement étroit et allongé; l'ancrage est réparti sur l'essentiel de la hauteur et de la largeur du bourrelet. Le passage de la carcasse dans le bourrelet est généralement sensiblement central par rapport aux parois dudit bourrelet. Par ailleurs, s'agissant d'un bourrelet relativement étroit sujet à des efforts à prédominance axiale, ni la pression de gonflage, ni la tension induite dans la carcasse ne permettent la génération d'important moments ou couples, tendant à faire pivoter ou tourner le bourrelet sur lui-même.

Avec un tel type de pneumatique, si la pression chute et que le roulage se poursuit, le maintien du pneumatique sur la jante n'est plus assuré, et dans la plupart des cas, il se produit un décoincement.

Le document EP 0 673 324 décrit un ensemble roulant comprenant au moins un pneumatique à armature de carcasse radiale ancrée dans chaque bourrelet et une jante de conformation particulière. Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante. Le pneumatique comporte des sièges de bourrelets adaptés pour un montage sur cette jante. Le type d'interface pneumatique/jante proposée dans ce document présente de nombreux avantages par rapport aux solutions déjà connues, notamment au niveau de la facilité de montage/démontage tout en permettant d'effectuer un certain parcours malgré une chute de pression.

Le document EP 0 748 287 décrit une solution permettant une première optimisation de la technologie de base décrite dans le document EP 0 673 324 préalablement cité. II s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale. Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement, de la tringle vers l'extérieur, afin que cette dernière génère ladite force de compression. Dans une telle configuration, la présence d'une tringle de type classique et le retournement de la carcasse sous cette dernière sont présentés comme étant indispensables pour générer la force de compression. Ceci limite les possibilités d'envisager d'autres types d'agencement.

D'autre part, le document EP 0 922 592, décrit deux modes de réalisations avec ancrage de la carcasse par retournement de celle-ci axialement vers l'extérieur. Le premier mode propose un ancrage de la carcasse dans le bourrelet par retournement radialement vers l'extérieur de l'extrémité de la carcasse. Le retournement est entouré de part et d'autre par deux couches radialement superposées de fils métalliques disposés axialement côte à côte et couvrant sensiblement toute la portion axiale le long du siège du bourrelet. Les couches sont agencées de façon à être parallèles au siège. Les types de fils ainsi que les dimensions correspondantes sont très précises. La seconde solution proposée dans ce document concerne des sièges de bourrelets avec des diamètres différents. L'arrimage de la carcasse s'effectue également de façon différente par rapport à la première solution. Tout d'abord, la carcasse se subdivise en deux portions radialement séparées au niveau du bourrelet. Chaque portion est adjointe d'une couche de fils disposée radialement, chaque couche étant disposée radialement extérieurement contre chacune des portions de carcasse. La portion de carcasse radialement extérieure et la couche de fils radialement à l'intérieur sont séparées par un insert de type élastomère à dureté élevée prévu dans le bourrelet. Cet insert garnit axialement la portion centrale du bourrelet et remonte radialement vers l'extérieur et axialement vers l'intérieur, au-delà de la limite radiale de présence des fils métalliques.

Les deux exemples de solutions du document EP 0 922 592 comportent plusieurs inconvénients. Ainsi, l'arrimage de la carcasse proposé dans ce document nécessite la présence d'un retournement axialement vers l'extérieur de la portion d'extrémité de la carcasse. D'autre part, les couches de fils superposées sont disposées radialement près du siège du bourrelet, en bonne partie à une position radiale plus près de l'axe de rotation que la portion haute du rebord sur lequel le bourrelet appuie. A moins d'utiliser des fils fortement extensibles, le montage/démontage du pneumatique est difficile à exécuter, dû à la position radiale défavorable des fils. On remarque également que les piles sont orientées de façon sensiblement parallèle au profil du siège contre lequel le bourrelet appuie. Selon la seconde solution, la carcasse se subdivise en deux portions et un insert à dureté élevé est nécessaire pour séparer d'une part les couches dé fils et d'autre part les deux portions de carcasse. L'ancrage de la carcasse n'est cependant pas réalisé dans l'insert. La forme de l'insert décrit est limitative.

Le document WO 01/39999 décrit un pneumatique à mobilité étendue dont chacun des bourrelets comporte un siège inversé, une zone d'ancrage, une zone d'appui et une zone de transition. Chacune des zones prises isolément de même que l'ensemble des zones forment en quelque sorte un bourrelet interne susceptible d'effectuer des mouvements relatifs, comme par exemple de type rotation, par rapport à une autre zone, ou par rapport à un centre de pression CP virtuel, ou par rapport au siège de la jante, etc.

De préférence, ladite zone d'appui est sensiblement allongée. Elle se prolonge par exemple sensiblement le long du siège du bourrelet. Le transfert des efforts lors de la rotation de la zone basse de la portion axialement interne vers la portion axialement externe est ainsi possible, tout en conservant un appui contre au moins une portion du siège du bourrelet Le transfert des efforts assure un auto-servage de la pointe du bourrelet contre la jante.

Le document US-A-2002/0179216 est considéré comme état de la technique le plus proche. Il divulgue un pneumatique correspondant au préambule de la revendication 1.

En règle générale, les pneumatiques comportent des éléments d'architecture conçus de façon symétrique, c'est-à-dire similaires sur les deux flancs. Ce mode de conception est si répandu qu'il-est devenu naturel pour l'homme du métier de concevoir des pneumatiques suivant cette pratique. Or, la transposition directe d'une telle pratique, dans des produits intrinsèquement asymétriques, peut présenter certaines limitations ou inconforts techniques. Par exemple, dans le cas de pneumatiques pourvus de flancs de hauteurs inégales et de sièges de bourrelets inversés, les efforts induits au niveau de chacun des bourrelets peuvent varier considérablement. Ainsi par exemple, avec un flanc externe relativement haut par rapport au flanc interne de la roue, les contraintes à supporter sont sensiblement plus importantes. Par ailleurs, le bourrelet et le flanc du côté extérieur du véhicule sont plus exposés aux aléas routiers et aux différentes agressions que cela peut entraîner. Ces différentes contraintes obligent souvent les concepteurs à prévoir de multiples éléments de renfort et/ou d'ancrage et/ou de protection afin de bien supporter les conditions exigeantes liées au positionnement du côté extérieur de la roue. Les éléments architecturaux résultant impliquent d'importantes conséquences en poids, en coût, en place, en difficultés et/ou temps de fabrication, en matériaux supplémentaires, etc En dupliquant l'architecture du bourrelet extérieur (correspondant de préférence au flanc le plus haut), établie en fonction des contraintes limites de ce côté de la roue, pour obtenir un bourrelet similaire du côté intérieur (correspondant de préférence au flanc le plus court), on amplifie d'autant ces diverses conséquences.

Par ailleurs, de nombreux produits comportent un bourrelet extérieur de plus grande dimension ou surface que le bourrelet intérieur. Par exemple, le bourrelet extérieur peut nécessiter des zones de protection contre les agressions de l'environnement extérieur. Dans les cas où la surface occupée par le bourrelet côté intérieur est plus petite par rapport au côté extérieur, la transposition directe d'une architecture établie en fonction d'un bourrelet extérieur peut s'avérer difficile, voire impossible, par manque de place dans le bourrelet intérieur.

La présente invention a pour objet de pallier ces différents inconvénients. Pour ce faire, elle propose un pneumatique pour roue de véhicule, comprenant:
- deux flancs espacés axialement l'un de l'autre, réunis à leurs portions radialement extérieures par une zone de sommet pourvue sur sa portion radialement extérieure d'une bande de roulement circonférentielle ;
- des bourrelets, disposés radialement intérieurement à chacun des flancs, chaque bourrelet comportant un siège et un rebord externe destinés à venir en contact avec une jante adaptée ;
- une structure de renfort s'étendant sensiblement radialement depuis chacun des bourrelets, le long des flancs, vers la zone sommet ;
- lesdits bourrelets comprenant :

- un siège de bourrelet comportant une génératrice dont l'extrémité axialement intérieure est sur un cercle de diamètre supérieur au diamètre du cercle sur lequel se trouve l'extrémité axialement extérieure ;
- une zone d'ancrage de la structure de renfort dans ledit bourrelet, comprenant un arrangement de fils circonférentiels disposés de façon sensiblement adjacente à une portion de la structure de renfort et comprenant au moins deux piles réparties de part et d'autre de la structure de renfort, un mélange de liaison étant disposé entre les fils circonférentiels et la structure de renfort ;
- une zone d'appui dudit bourrelet s'étendant sensiblement le long du siège de celui-ci ;
- chacun des bourrelets comporte un agencement spécifique et distinct de sa zone d'ancrage, de sorte que la zone d'ancrage du bourrelet associé au flanc le plus long présente une capacité d'ancrage plus élevée que la zone d'ancrage du bourrelet associé au flanc le plus court.

La capacité d'ancrage, (autrement désignée force d'ancrage ou force de rétention) s'entend comme étant la capacité de la zone d'ancrage, de maintenir favorablement et durablement l'ancrage de la structure de renfort de type carcasse dans la dite zone, dès lors que la dite structure est sujette aux contraintes mécaniques, notamment de tension, comprises dans des limites préétablies.

On peut alors concevoir un bourrelet de flanc court qui soit par exemple plus simple, plus léger, plus compact, plus souple, plus simple à fabriquer, moins coûteux, etc. On retrouve des avantages au niveau des coûts puisqu'on évite l'utilisation de matériaux qui seraient pratiquement inutiles, et qui, dans une certaine mesure, impliqueraient des pénalités en poids. Par ailleurs, le flanc court conserve des caractéristiques de montage/démontage favorables. Par ailleurs la capacité de résistance aux sollicitations mécaniques du bourrelet du côté du flanc long, souvent disposé vers l'extérieur du véhicule, est en général supérieure à celle du côté interne.

De façon similaire, le bourrelet du flanc long peut être conçu sans crainte que les éléments additionnels viennent pénaliser le bourrelet du flanc court, pour lequel ces éléments additionnels ne seraient pas forcément requis. Cela peut permettre, pour certaines utilisations pour lesquelles les conditions limites sont extrêmes, de concevoir un produit adapté et performant, qu'il aurait été difficile à réaliser avec deux zones d'ancrage identiques, par exemple par manque de place dans le bourrelet du flanc court.

Un pneumatique selon l'invention est particulièrement avantageux pour certains types de produits de haute technicité et/ou des produits dont la hauteur de flanc est importante tels des pneumatiques de type « SUV (Sport Utility Vehicle) » par exemple.

Selon un mode de réalisation avantageux de l'invention, les zones d'ancrage des de chaque flanc sont agencées de façon à produire un effort de serrage sur jante sensiblement identique de chaque côté lorsque le pneumatique est monté sur une jante correspondante et soumis à une pression correspondant sensiblement à sa pression de fonctionnement.

Le fonctionnement du pneumatique est alors plus homogène, notamment dans la zone des bourrelets. L'homogénéité de la répartition des efforts est importante pour assurer les qualités opérationnelles -telles que la facilité de montage/démontage- et intrinsèques telles que la durabilité ou l'endurance-.

En pression de fonctionnement, le type de pneumatiques selon l'invention, comportant des hauteurs de flancs inégales, présente des niveaux différents de tension des fils de structure de renfort. La tension des fils est en effet plus élevée du côté associé au flanc le plus long que du côté associé au flanc le plus court. Les solutions typiques consistant à configurer les zones d'ancrage à l'identique dans les deux bourrelets induirait, dans un tel cas, une force de serrage plus élevée du côté associé au flanc le plus court. En effet, en considérant le fait que l'ancrage serve principalement d'une part à absorber les tensions des structures de renfort, et d'autre part à assurer le serrage des bourrelets contre la jante sur laquelle le pneumatique est monté, dès lors que les niveaux de tensions des fils de renfort différent d'un côté à l'autre, les capacités d'ancrage doivent différer si on veut éviter des différentiels de serrage d'un bourrelet à l'autre. Ainsi, selon un mode de réalisation préférentiel, le différentiel de capacité ou de force d'ancrage entre les deux bourrelets correspond sensiblement à la différence entre les niveaux de tension des fils de renfort d'un côté par rapport à l'autre, ou d'un flanc par rapport à l'autre. De la sorte, on évite que le serrage soit plus élevé du côté du pneumatique où la hauteur de flanc est la plus faible.

Une telle configuration permet par ailleurs de répartir de manière optimale les efforts au niveau de la zone d'ancrage, en particulier au niveau de l'arrangement de fils circonférentiels. On évite par exemple d'avoir des écarts importants tant dans la nature que dans le niveau des contraintes subies par les différents fils de l'arrangement, comme par exemple, que certains fils soient sujets à des efforts de tension, alors que d'autres sont sujets à des efforts de compression.

Selon une variante de réalisation avantageuse du pneumatique selon l'invention, entre des valeurs correspondant sensiblement à une pression nulle et une pression normale de fonctionnement, la répartition de pression le long de la zone d'appui est sensiblement indépendante de ladite valeur de la pression. Lors du gonflage du pneumatique, les effets induits sur la répartition des efforts le long de l'interface entre la zone d'appui et le siège de la jante n'affecte pas de manière importante ladite répartition. On obtient une stabilité dynamique qui permet de mieux garantir un bon serrage sur jante, quelle que soit la condition et indépendamment des tolérances. Les contraintes internes, en particulier au niveau du bourrelet du pneumatique, sont dynamiquement stables, contribuant à la pérennité du produit. La stabilité dynamique permet aussi d'éviter l'apparition de contraintes parasites au niveau du bourrelet, comme par exemple des contraintes susceptibles d'affecter les propriétés ou les qualités du produit. Par ailleurs, la sensibilité aux variations de tolérances de l'assemblage jante/pneumatique est réduite.

De manière avantageuse, une zone latérale extérieure est disposée dans la zone du bourrelet prévue pour être placée entre le rebord ou crochet de jante et la zone d'ancrage. Cette zone est meublée de préférence par un mélange caoutchoutique de sensiblement haut module, par exemple compris entre 20 et 60 Mpa, ou même plus.

De manière avantageuse, la zone latérale extérieure est prévue dans la portion axialement externe du bourrelet et s'étend entre la portion adjacente au crochet de jante et la zone d'ancrage. Elle coopère avantageusement avec la zone d'ancrage, ce qui permet une meilleure action mécanique entre ladite zone d'ancrage et la portion du bourrelet adjacente au crochet de jante.

Cette zone permet d'augmenter la pression de serrage, notamment dans la région du crochet de jante. Grâce à sa déformabilité réduite, elle permet de limiter la tendance du bourrelet à glisser radialement extérieurement au-delà du crochet de jante. Elle contribue par ailleurs d'une part à inhiber toute tendance à générer un moment de rotation, et d'autre part à établir une stabilité dynamique, comme par exemple lors de virages ou de sollicitations latérales importantes.

Selon un mode de réalisation préférentiel de l'invention, chaque fil circonférentiel disposé dans le bourrelet associé au flanc le plus long présente un module de Young Ei et une surface Si et chaque fil disposé dans le bourrelet associé au flanc le plus court présente un module de Young Ee et une surface Se, la disposition des fils desdits agencements étant telle que Σ(EexSe)ext>Σ(EixSi)int.

Selon ce mode de réalisation, la rigidité résultante associée au flanc le plus long, est supérieure à la rigidité résultante associée au flanc le plus court.

La somme des produits des modules et des surfaces effectives de chacun des fils de chaque côté de la structure de renfort constitue un paramètre de mesure et de comparaison fiable et précis. De manière avantageuse, cette formulation permet en outre de prendre en compte dans la comparaison tout type de fil ou filament ou câble. On procède de préférence à la comparaison à partir des fils disposés dans la zone du bourrelet ou dans la zone d'ancrage de la structure de renfort dans le bourrelet.

II est à noter que dans le cas d'un câble multi-filaments ou à fils multiples, la section considérée est la section effective. Les espaces libres ou vides entre les fils ne sont pas considérés.

De manière avantageuse, la somme des produits ExS est considérée uniquement dans la zone des bourrelets du pneumatique. Ainsi, si par exemple des fils de protection, souvent de type textile, se trouvent dans une portion du flanc et/ou du sommet, ces fils ne sont pas considérés dans l'équation.

Selon une variante avantageuse de l'invention, Σ(EexSe)ext / Σ(EixSi)int > 1.

Selon diverses variantes de réalisation selon l'invention, au moins une des caractéristiques des fils circonférentiels de la zone d'ancrage du bourrelet associé au flanc le plus long diffère par rapport aux caractéristiques des fils circonférentiels de la zone d'ancrage du bourrelet associé au flanc le plus court. II peut s'agir du type de matériau, du nombre de fils ou d'enroulements, du nombre de piles de fils, ou diverses combinaisons de ces variantes.

Selon une variante de réalisation avantageuse du pneumatique selon l'invention, le flanc le plus court est destiné à être positionné côté intérieur du véhicule et le flanc le plus long est destiné à être positionné côté extérieur du véhicule.

La zone d'ancrage ne comporte pas de tringle, notamment de tringle de type traditionnel, comme par exemple une tringle multifilaire contre laquelle une nappe carcasse est retournée, de façon à ce que la zone de coopération entre la portion retournée de nappe et la tringle procure le maintien de la nappe carcasse.

La structure de renfort des flancs et du sommet est avantageusement de type carcasse, ses propriétés mécaniques s'apparentant à celles des nappes carcasses de type connu. Par ailleurs, cette structure de renfort est avantageusement configurée sans séparation axiale au niveau du bourrelet. Ainsi, tous les fils de l'agencement circonférentiel occupent de préférence une position axiale sensiblement identique.

La zone d'appui est de préférence sensiblement adjacente au siège de jante.

Selon un mode de fabrication particulièrement avantageux où les différents constituants du pneumatique sont disposés directement sur un noyau central dont la forme confère au pneumatique en cours de fabrication une forme sensiblement similaire à la forme du produit fini, la suppression du retournement (qui existe avec une architecture traditionnelle) permet une simplification avantageuse de la fabrication.

Selon une forme d'exécution avantageuse de l'invention, les bases des piles (les fils radialement les plus près de l'axe de rotation du pneumatique) sont disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante adaptée au pneumatique. Les opérations de montage/démontage du pneumatique sur sa jante sont alors facilitées.

De manière avantageuse, la structure de renfort de type carcasse s'étend sensiblement radialement depuis chacun des bourrelets, le long des flancs, vers la zone sommet. Ladite structure peut ainsi être unitaire et s'étendre d'un bourrelet à l'autre, ou encore être partagée en deux demi-structures, s'étendant chacune le long d'un seul flanc.

Le nombre de piles ainsi que le nombre d'enroulements ou de spires de chacune des piles est avantageusement établi en fonction des caractéristiques recherchées pour le pneumatique, par exemple sa pression de service. Par exemple, un nombre de piles plus élevé peut être souhaité afin d'augmenter la rigidité au niveau de la zone du bourrelet.

La structure de renfort de type carcasse est de préférence constituée d'un enroulement filaire faisant des allers-retours entre les deux bourrelets en formant dans chacun des bourrelets des boucles. Par ailleurs, l'enroulement filaire est préférablement constitué d'un seul fil.

D'autres caractéristiques et avantages de l'invention apparaîtront à la lecture des exemples de réalisation du pneumatique conforme à l'invention, donnés à titre non limitatif et en se référant aux figures 1 à 10 annexées, dans lesquelles:
la figure 1 illustre, en coupe transversale, un pneumatique selon l'invention;
la figure 2 illustre, en coupe transversale agrandie, les bourrelets de l'exemple de réalisation de la figure 1;
la figure 3 illustre, en coupe transversale, un autre exemple de réalisation d'un pneumatique selon l'invention;
la figure 4 illustre, en coupe transversale agrandie, les bourrelets de l'exemple de réalisation de la figure 3;
la figure 5 illustre, en coupe transversale, un autre exemple de réalisation d'un pneumatique selon l'invention;
la figure 6 illustre, en coupe transversale agrandie, les bourrelets de l'exemple de réalisation de la figure 5;
la figure 7 illustre, en coupe transversale, un autre exemple de réalisation d'un pneumatique selon l'invention;
la figure 8 illustre, en coupe transversale agrandie, les bourrelets de l'exemple de réalisation de la figure 7 ;
la figure 9 illustre, en coupe transversale, un autre exemple de réalisation d'un pneumatique selon l'invention;
la figure 10 illustre, en coupe transversale agrandie, les bourrelets de l'exemple de réalisation de la figure 9.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

II existe également des procédés d'assemblage sur noyau toroïdal utilisant des produits semi-finis spécialement adaptés pour une pose rapide, efficace et simple sur un noyau central. Engin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des révolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. II peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

D'autre part, on entend par structure radiale, un agencement à 90 degrés, mais aussi, selon l'usage, à un angle proche de 90°.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. II est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil soit en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison.

Ces mélanges ont habituellement un bas module d'élasticité.

On appelle "bourrelet" la portion du pneumatique adjacente radialement intérieurement au flanc.

On entend par "module d'élasticité" d'un mélange caoutchoutique, un module d'extension sécant obtenu à une déformation d'extension uniaxiale de l'ordre de 10% à température ambiante.

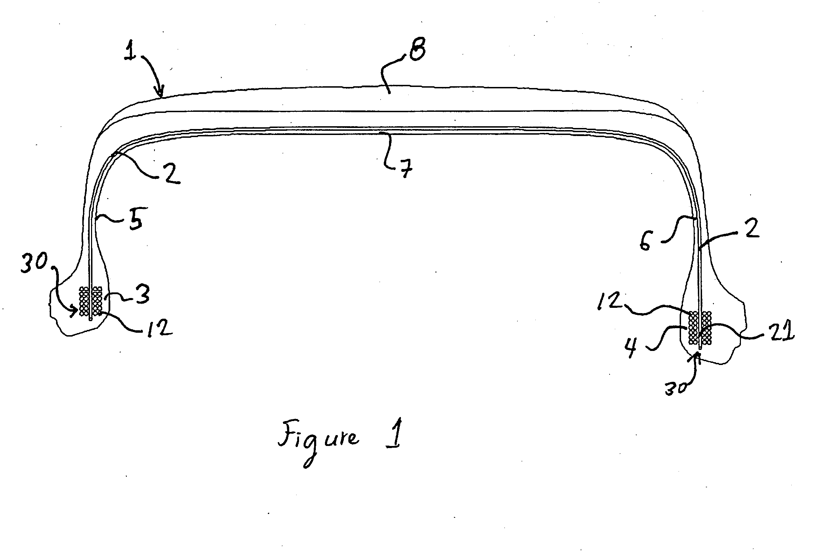

La figure 1 illustre, en coupe transversale, un pneumatique 1 selon l'invention. Ce pneumatique comprend un premier flanc 5 adjacent à un premier bourrelet 3 correspondant de préférence au bourrelet intérieur. De façon similaire, la portion opposée du pneumatique comprend un second flanc 6 adjacent à un second bourrelet 4. Un sommet 7, sur lequel est prévue une bande de roulement 8, assure la jonction entre les flancs. Le sommet comporte de préférence au moins une ceinture de renfort.

Le pneumatique comporte une structure de renfort de type carcasse 2, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité 21 de la structure de renfort 2 sont situées dans les bourrelets.

La structure de renfort 2 peut être réalisée par enroulement d'un seul fil faisant des aller-retour entre les deux bourrelets en formant dans chacun des bourrelets des boucles. Ces boucles, enrobées dans le mélange caoutchoutique, contribuent à la liaison mécanique entre la structure de renfort 2 et le bourrelet, notamment les piles 13. Par la présence de boucles entre le parcours "aller" et le "retour" du fil, on voit que le renforcement est de type mono filament. Bien entendu, la structure de renfort de type carcasse pourrait ne pas être fabriquée de façon continue à partir d'un seul fil, et il pourrait ne pas y avoir de boucles, mais par exemple des extrémités libres.

Le bourrelet comporte par ailleurs une zone d'ancrage 30 sensiblement circonférentielle et comprenant un arrangement de fils circonférentiels 12 disposés de façon sensiblement adjacente à une portion de la structure de renfort 2. Ladite zone d'ancrage comprend au moins deux piles 13 réparties de part et d'autre de la structure de renfort, un mélange de liaison 14 (ou d'ancrage) étant disposé entre les fils circonférentiels et la structure de renfort.

Dans la zone d'ancrage, au moins un fil 12 d'une des piles 13 est de préférence disposé à proximité immédiate d'une portion 21 de la structure de renfort 2. Les piles peuvent également être agencées de façon à ce qu'une portion 21 soit intercalée entre des piles 13.

Dans la zone d'ancrage, l'espace entre les fils 12 et la structure de renfort 2 est occupé par un mélange caoutchoutique de liaison 14. On peut également prévoir l'utilisation de plusieurs mélanges ayant des caractéristiques différentes, délimitant plusieurs zones, les combinaisons de mélanges et les agencements résultants étant quasi-illimités. Selon diverses variantes, on utilise des mélanges caoutchoutiques de liaison 14 selon une panoplie de modules : à titre d'exemple non limitatif, le module d'élasticité peut être situé entre 10 et 20 Mpa, ou même à des valeurs supérieures, telles que 40 Mpa ou plus.

Les arrangements de fils 11 peuvent être agencés et fabriqués différemment. Par exemple, une pile 13 peut avantageusement être constituée d'un seul fil 12, enroulé (sensiblement à zéro degrés) en spirale, de préférence depuis le plus petit diamètre vers le plus grand diamètre. Une pile peut également être constituée de plusieurs fils concentriques posés l'un dans l'autre.

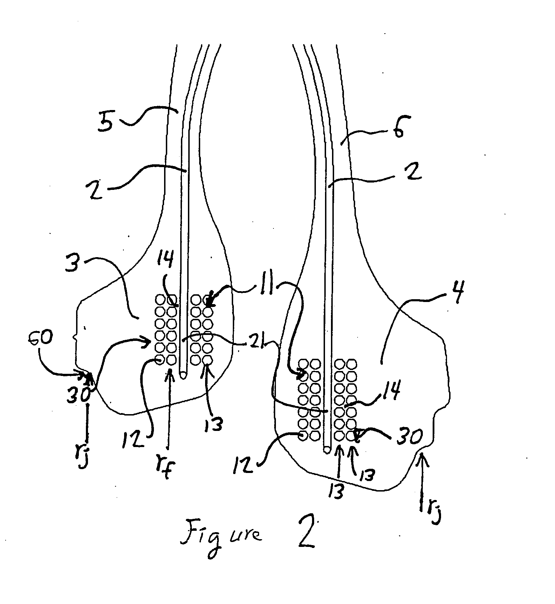

Selon un premier exemple de réalisation de l'invention, présenté aux figures 1 et 2, l'asymétrie des bourrelets 3 et 4 provient notamment du fait que les enroulements ou le nombre de tours de fils ne sont pas identiques dans les deux bourrelets. A titre d'exemple, dans le bourrelet 3, les piles comportent 6 enroulements (ou 6 fils, si ceux-ci ne font qu'un seul tour), tandis que dans le bourrelet 4, les piles 13 comportent 7 enroulements (ou 7 fils, si ceux-ci ne font qu'un seul tour). Bien évidemment, les piles pourraient également être asymétriques dans un même bourrelet. Les différences entre les nombres d'enroulements ou de fils pourraient par ailleurs être plus importantes. De manière avantageuse, les écarts entre les piles d'un bourrelet par rapport à l'autre permettent de vérifier la relation suivante : Σ(Ee X Se)ext > Σ(Ei X Si)int, dans laquelle Ei représente le module de Young des fils circonférentiels disposés dans le bourrelet du côté axialement interne du pneumatique ou associé au flanc le plus court; Si représente la surface des fils disposés dans le bourrelet du côté axialement interne du pneumatique ou associé au flanc le plus court; Ee représente le module de Young des fils circonférentiels disposés dans le bourrelet du côté axialement externe du pneumatique ou associé au flanc le plus long; Se représente la surface des fils disposés dans le bourrelet du côté axialement externe du pneumatique ou associé au flanc le plus long. De cette façon la rigidité résultante associé au flanc le plus long, de préférence du côté extérieur, est supérieure à la rigidité résultante associé au flanc le plus court, de préférence du côté intérieur, ce qui occasionne une capacité ou force d'ancrage plus importante du côté externe que du côté interne.

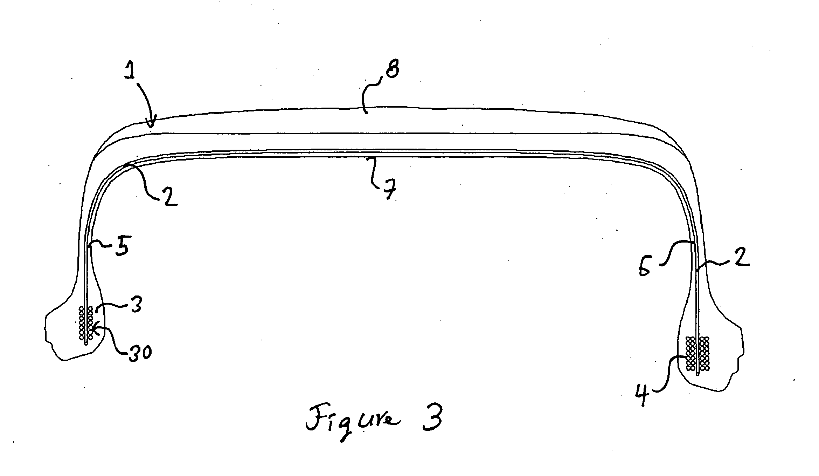

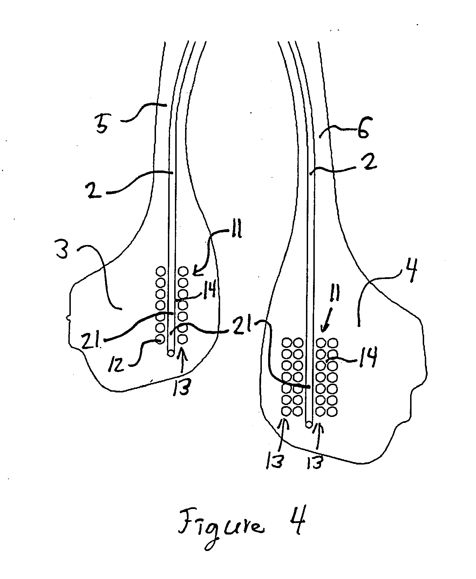

Selon une seconde forme de réalisation, illustrée aux figures 3 et 4, l'asymétrie des bourrelets 3 et 4 provient notamment du fait que le nombre de piles 13 n'est pas identique dans les deux bourrelets. A titre d'exemple, dans le bourrelet 3, on retrouve une pile 13 de fils 12 de chaque côté de la structure 21, tandis que dans le bourrelet 4, on retrouve deux piles de chaque côté de la structure 21. Bien évidemment, le nombre de piles pourrait également être asymétrique dans un même bourrelet. Les différences entre les nombres de piles entre chacun des deux bourrelets pourraient par ailleurs être plus importantes. De manière avantageuse, les écarts entre les nombres de piles d'un bourrelet par rapport à l'autre permettent de vérifier la relation suivante : Σ(Ee X Se)ext > Σ(Ei X Si)int, dans laquelle Ei représente le module de Young des fils circonférentiels disposés dans le bourrelet du côté axialement interne du pneumatique ou associé au flanc le plus court; Si représente la surface des fils disposés dans le bourrelet du côté axialement interne du pneumatique ou associé au flanc le plus court; Ee représente le module de Young des fils circonférentiels disposés dans le bourrelet du côté axialement externe du pneumatique ou associé au flanc le plus long; Se représente la surface des fils disposés dans le bourrelet du côté axialement externe du pneumatique ou associé au flanc le plus long. De cette façon la rigidité résultante associé au flanc le plus long, de préférence du côté externe, est supérieure à la rigidité résultante associé au flanc le plus court, de préférence du côté interne, ce qui occasionne une capacité ou force d'ancrage plus importante du côté externe que du côté interne.

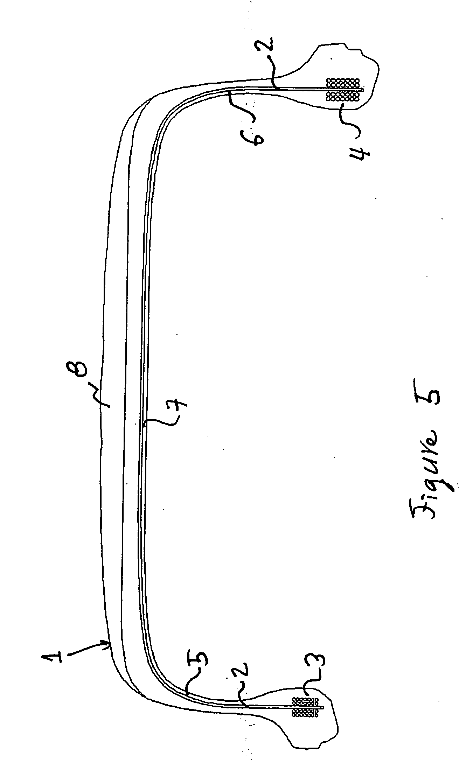

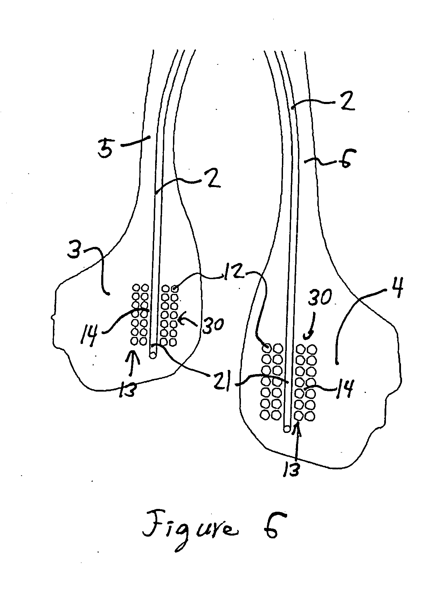

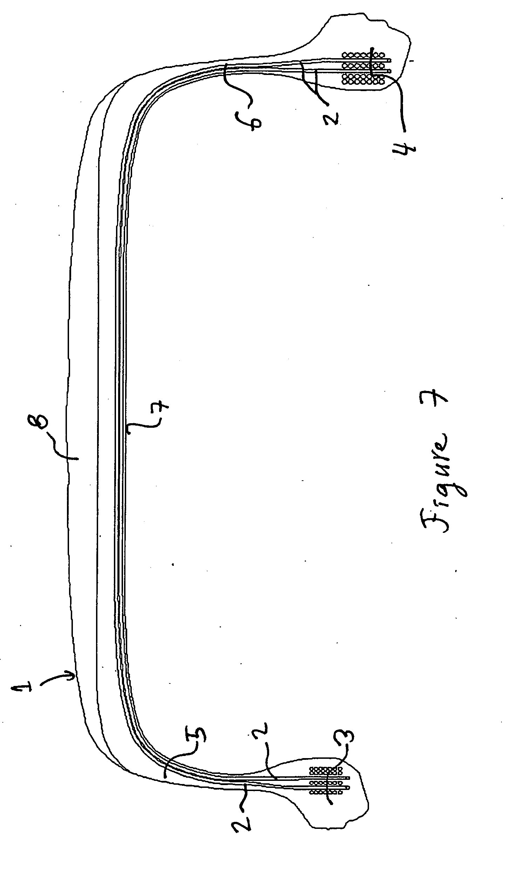

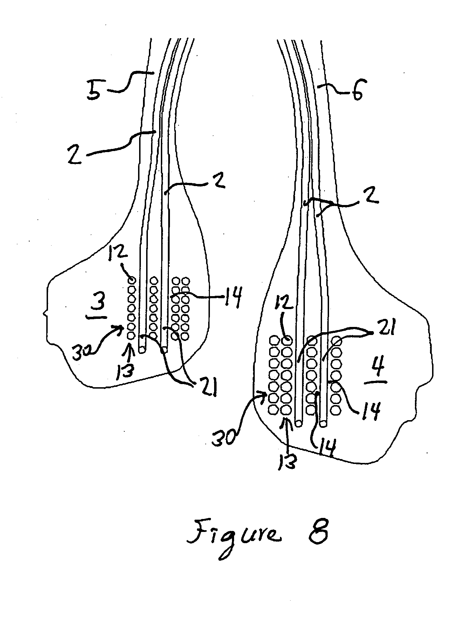

Les figures 5 à 10 illustrent des exemples d'une autre forme d'exécution d'un pneumatique selon l'invention. Dans cette forme d'exécution, dans chacun des bourrelets 3 et 4 se trouvent des agencements 11 de fils 12 de caractéristiques différentes. La caractéristique appelée à varier peut être la nature ou le matériau des fils, les dimensions et/ou profil des fils, etc. Dans les exemples illustrés aux figures 5 à 10, la disposition des fils desdits agencements est telle que la densité surfacique de fils 12 disposés dans le bourrelet associé au flanc le plus long, de préférence du côté externe, est supérieure à la densité surfacique de fils 12 disposés dans le bourrelet associé au flanc le plus court, de préférence du côté interne. Selon un exemple avantageux, la densité surfacique correspond à la somme des surfaces des profils filaires (des fils ou filaments ou câbles ou retords coupés). Par exemple, un nombre restreint de fils de diamètre important peut occuper une surface plus importante qu'un plus grand nombre de fils ou câbles ou filaments ou retords, etc, de diamètres en général plus petits. La somme des surfaces importe : il peut s'agir d'une somme de surfaces identiques ou non identiques.

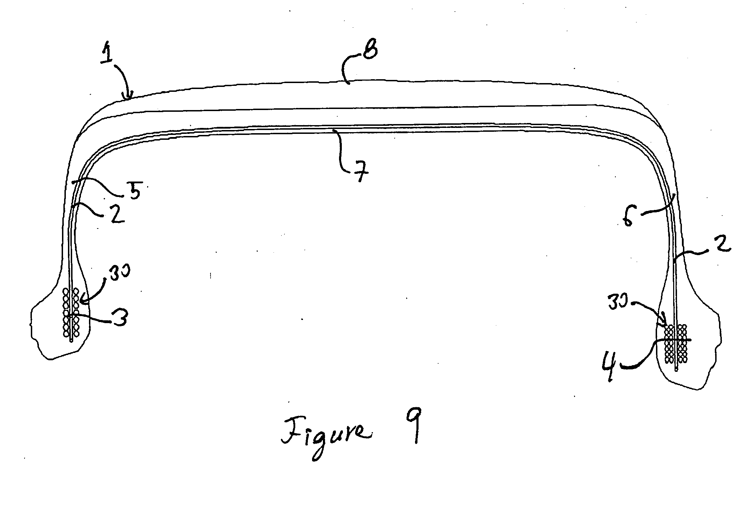

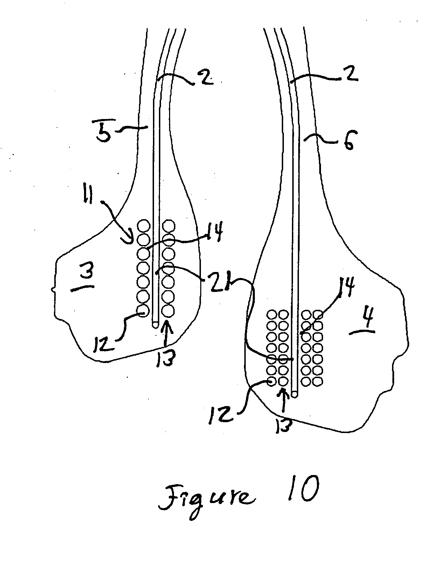

Bien évidemment, tel qu'illustré par les figures 9 et 10, diverses combinaisons des formes d'asymétrie préalablement décrites peuvent être réalisées. Ainsi, aux figures 9 et 10, le nombre de piles et les caractéristiques des fils circonférentiels varient.

Le pneumatique selon l'invention est particulièrement adapté pour être utilisé sur une jante du type de celle décrite dans le document EP 0 673 324. Une telle jante comporte un siège et de préférence un rehaussement ou rebord situé axialement et radialement vers l'extérieur.

Les bases des piles (les fils radialement les plus près de l'axe de rotation du pneumatique) sont de préférence disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante 60 (ou crochet de jante) adaptée au pneumatique. Les opérations de montage/démontage sont alors facilitées. Ainsi, à la figure 2, on constate que r_{f} (rayon des premiers fils) est supérieur à rⱼ (rayon du rebord ou crochet de jante). Ce rayon correspond à la distance depuis l'axe de rotation.

Les différents exemples de réalisations décrits et/ou illustrés peuvent avantageusement être réalisés avec des dispositifs du type de ceux décrits dans le document EP 0 580 055.

Ainsi par exemple, il est très avantageux de confectionner le pneumatique sur un noyau central imposant la forme de sa cavité intérieure. On applique sur ce noyau, de préférence dans l'ordre requis par l'architecture finale, tous les constituants du pneumatique, qui sont disposés directement à leur place finale, selon un profil sensiblement final. Dans ce cas, un tel pneumatique peut être moulé et vulcanisé comme exposé dans le document US 4 895 692.

## Revendications

1. Pneumatique (1) pour roue de véhicule, comprenant:
- deux flancs (5,6) espacés axialement l'un de l'autre, réunis à leurs portions radialement extérieures par une zone de sommet (7) pourvue sur sa portion radialement extérieure d'une bande de roulement (8) circonférentielle;
- des bourrelets (3,4), disposés radialement intérieurement à chacun des flancs, chaque bourrelet comportant un siège et un rebord externe destinés à venir en contact avec une jante adaptée;
- une structure de renfort (2) s'étendant sensiblement radialement depuis chacun des bourrelets (3,4), le long des flancs (5,6), vers la zone sommet (7);
- lesdits bourrelets (3,4) comprenant :
- un siège de bourrelet comportant une génératrice dont l'extrémité axialement intérieure est sur un cercle de diamètre supérieur au diamètre du cercle sur lequel se trouve l'extrémité axialement extérieure;
- une zone d'ancrage (30) de la structure de renfort (2) dans ledit bourrelet, comprenant un arrangement de fils (12) circonférentiels disposés de façon sensiblement adjacente à une portion de la structure de renfort et comprenant au moins deux piles (13) réparties de part et d'autre de la structure de renfort, un mélange de liaison (14) étant disposé entre les fils circonférentiels et la structure de renfort;
- une zone d'appui dudit bourrelet s'étendant sensiblement le long du siège de celui-ci;
- chacun des bourrelets (3,4) comporte un agencement spécifique et distinct de sa zone d'ancrage, de sorte que la zone d'ancrage du bourrelet associé au flanc le plus long (6) présente une capacité d'ancrage plus élevée que la zone d'ancrage du bourrelet associé au flanc le plus court (5) et les zones d'encrage de chaque flanc sont agencées de façon à produire un effort de serrage sur jante sensiblement identique de chaque côté lorsque le pneumatique est monté sur une jante correspondante et soumis à une pression correspondant sensiblement à sa pression de fonctionnement,
**caractérisé en ce que** chaque fil circonférentiel (12) disposé dans le bourrelet associé au flanc le plus court (5) présente un module de Young Eᵢ et une surface Si et chaque fil (12) disposé dans le bourrelet associé au flanc le plus long (6) présente un module de Young Eₑ et une surface Sₑ, la disposition des fils desdits agencements étant telle que Σ(EₑxSₑ)ₑₓₜ>Σ(EᵢxSᵢ)ᵢₙₜ.

2. Pneumatique selon la revendication 1, dans lequel la somme des produits ExS est considérée uniquement dans la zone des bourrelets (3,4) du pneumatique.

3. Pneumatique selon l'une des revendications 1 ou 2, dans lequel Σ(EₑxSₑ)ₑₓₜ / Σ(EᵢxSᵢ)ᵢₙₜ > 1.

4. Pneumatique selon l'une des revendications précédentes, dans lequel le nombre de fils circonférentiels (12) de la zone d'ancrage du bourrelet associé au flanc le plus long (6) est supérieur au nombre de fils circonférentiels de la zone d'ancrage du bourrelet associé au flanc le plus court (5).

5. Pneumatique selon l'une des revendications précédentes, dans lequel le nombre de piles (13) de fils circonférentiels de la zone d'ancrage du bourrelet associé au flanc le plus long (6) est supérieur au nombre de piles de fils circonférentiels de la zone d'ancrage du bourrelet associé au flanc le plus court (5).

6. Pneumatique selon l'une des revendications précédentes, dans lequel au moins une caractéristique des fils circonférentiels (12) de la zone d'ancrage (30) du bourrelet associé au flanc le plus long (6) diffère par rapport aux caractéristiques des fils circonférentiels (12) de la zone d'ancrage (30) du bourrelet associé au flanc le plus court (5).

7. Pneumatique selon la revendication 1, dans lequel ladite zoné d'ancrage du bourrelet associé au flanc le plus long (6) est agencée dans ledit bourrelet de façon à ce que, à pression normale, les efforts de la structure de renfort (2) se répartissant de façon sensiblement homogène de part et d'autre de ladite structure, dans ladite zone d'ancrage (30).

8. Pneumatique selon l'une des revendications 1 à 7, dans lequel le flanc le plus court (5) est destiné à être positionné côté intérieur du véhicule et le flanc le plus long (6) est destiné à être positionné côté extérieur du véhicule.

## Claims

1. Tyre (1) for a vehicle wheel, comprising:
- two sidewalls (5,6) spaced apart axially from each other, joined at their radially outer portions by a crown zone (7) provided on its radially outer portion with a circumferential tread (8);
- beads (3,4), arranged radially to the inside of each of the sidewalls, each bead comprising a seat and an outer flange which are intended to come into contact with a suitable rim;
- a reinforcement structure (2) extending substantially radially from each of the beads (3,4), along the sidewalls (5,6), towards the crown zone (7);
- said beads (3,4) comprising:
- a bead seat comprising a generatrix, the axially inner end of which lies on a circle of diameter greater than the diameter of the circle on which the axially outer end is located;
- an anchoring zone (30) for the reinforcement structure (2) in said bead, comprising an arrangement of circumferential cords (12) disposed substantially adjacently to a portion of the reinforcement structure and comprising at least two stacks (13) distributed on either side of the reinforcement structure, a bonding compound (14) being provided between the circumferential cords and the reinforcement structure;
- a bearing zone for said bead extending substantially along the seat of the latter;
- each of the beads (3,4) comprises a specific and distinct arrangement of the anchoring zone thereof, such that the anchoring zone of the bead corresponding to the longer sidewall (6) exhibits a greater anchoring capacity than the anchoring zone of the bead corresponding to the shorter sidewall (5) and both anchoring zones are arranged in such a manner as to produce a rim clamping load which is substantially identical on each side when the tyre is fitted on an appropriate rim and pressurised to a pressure substantially corresponding to its operating pressure, **characterised in that** each circumferential cord (12) arranged in the bead of the shorter sidewall (5) exhibits a Young's modulus Eᵢ and a surface area Si and each cord (12) arranged in the bead of the longer sidewall (6) exhibits a Young's modulus Eₑ and a surface area Sₑ, the cords of said arrangements being disposed such that Σ(EₑXSₑ)ₑₓₜ>Σ(EᵢXSᵢ)ᵢₙₜ.

2. Tyre according to Claim 1, in which the sum of the products ExS is considered solely in the bead zones (3,4) of the tyre.

3. Tyre according to Claim 1 or 2, in which Σ(Eₑ×Sₑ)ext / Σ(Eᵢ×Sᵢ)ᵢₙₜ > 1.

4. Tyre according to any of the preceding claims, in which the number of circumferential cords (12) of the anchoring zone of the bead of the longer sidewall (6) is greater than the number of circumferential cords of the anchoring zone of the shorter sidewall (5).

5. Tyre according to any of the preceding claims, in which the number of stacks (13) of circumferential cords of the anchoring zone of the longer sidewall (6) is greater than the number of stacks of circumferential cords of the anchoring zone of the shorter sidewall (5).

6. Tyre according to any of the preceding claims, in which at least one characteristic of the circumferential cords (12) of the anchoring zone (30) of the longer sidewall (6) differs from the characteristics of the circumferential cords (12) of the anchoring zone (30) of the shorter sidewall (5).

7. Tyre according to Claim 1, in which said anchoring zone of the longer sidewall (6) is arranged in said bead in such a manner that, at normal pressure, the forces of the reinforcement structure (2) are distributed substantially homogeneously on either side of said structure in said anchoring zone (30).

8. Tyre according to any of Claims 1 to 7, in which the shorter sidewall (5) is intended to be positioned towards the interior side of the vehicle and the longer sidewall (6) is intended to be positioned towards the exterior side of the vehicle.

## Patentansprüche

1. Luftreifen (1) für ein Fahrzeugrad, der aufweist:
- zwei Flanken (5, 6) mit axialem Abstand zueinander, die in ihren radial äußeren Abschnitten durch eine Scheitelzone (7) verbunden sind, welche auf ihrem radial äußeren Abschnitt mit einer Umfangslauffläche (8) versehen ist;
- Wülste (3, 4), die radial innerhalb jeder der Flanken angeordnet sind, wobei jeder Wulst einen Sitz und einen äußeren Rand aufweist, die dazu bestimmt sind, mit einer geeigneten Felge in Kontakt zu kommen;
- eine Verstärkungsstruktur (2), die sich im Wesentlichen radial von jedem der Wülste (3, 4) entlang der Flanken (5, 6) zur Scheitelzone (7) erstreckt;
- wobei die Wülste (3, 4) aufweisen:
- einen Wulstsitz, der eine Erzeugende aufweist, deren axial inneres Ende sich auf einem Kreis mit einem Durchmesser befindet, der größer ist als der Durchmesser des Kreises, auf dem sich das axial äußere Ende befindet;
- eine , Verankerungszone (30) der Verstärkungsstruktur (2) im Wulst, die eine Anordnung von Umfangsdrähten (12) enthält, die einem Abschnitt der Verstärkungsstruktur im Wesentlichen benachbart angeordnet sind, und die mindestens zwei Stapel (13) enthält, die zu beiden Seiten der Verstärkungsstruktur verteilt sind, wobei eine Verbindungsmischung (14) zwischen dem Umfangsdrähten und der Verstärkungsstruktur angeordnet ist;
- eine Auflagezone des Wulsts, die sich im Wesentlichen entlang von dessen Sitz erstreckt;
- wobei jeder der Wülste (3, 4) eine spezifische und unterschiedliche Anordnung seiner Verankerungszone aufweist, derart, dass die Verankerungszone des der längeren Flanke (6) zugeordneten Wulsts eine höhere Verankerungskapazität hat als die Verankerungszone des der kürzeren Flanke (5) zugeordneten Wulsts, und die Verankerungszonen jeder Flanke so angeordnet sind, dass auf jeder Seite eine im Wesentlichen gleiche Felgen-Aufspannkraft erzeugt wird, wenn der Luftreifen auf eine entsprechende Felge montiert und einem Druck ausgesetzt wird, der im Wesentlichen seinem Betriebsdruck entspricht,
**dadurch gekennzeichnet, dass** jeder Umfangsdraht (12), der in dem der kürzeren Flanke (5) zugeordneten Wulst angeordnet ist, einen Young-Modul Eᵢ und eine Fläche Sᵢ hat, und jeder Draht (12), der in dem der längeren Flanke (6) zugeordneten Wulst angeordnet ist, einen Young-Modul Eₑ und eine Fläche Sₑ hat, wobei die Einteilung der Drähte der Anordnungen so ist, dass gilt Σ(Eₑ×Sₑ)ₑₓₜ>Σ(Eᵢ×Sᵢ)ᵢₙₜ.

2. Luftreifen nach Anspruch 1, bei dem die Summe der Produkte E×S nur in der Zone der Wülste (3, 4) des Luftreifens berücksichtigt wird.

3. Luftreifen nach einem der Ansprüche 1 oder 2, bei dem gilt Σ(Eₑ×Sₑ)ₑₓₜ/Σ(Eᵢ×Sᵢ)ᵢₙₜ>1.

4. Luftreifen nach einem der vorhergehenden Ansprüche, bei dem die Anzahl von Umfangsdrähten (12) der Verankerungszone des der längeren Flanke (6) zugeordneten Wulsts größer ist als die Anzahl von Umfangsdrähten der Verankerungszone des der kürzeren Flanke (5) zugeordneten Wulsts.

5. Luftreifen nach einem der vorhergehenden Ansprüche, bei dem die Anzahl von Stapeln (13) von Umfangsdrähten der Verankerungszone des der längeren Flanke (6) zugeordneten Wulsts größer ist als die Anzahl von Stapeln von Umfangsdrähten der Verankerungszone des der kürzeren Flanke (5) zugeordneten Wulsts.

6. Luftreifen nach einem der vorhergehenden Ansprüche, bei dem mindestens ein Merkmal der Umfangsdrähte (12) der Verankerungszone (30) des der längeren Flanke (6) zugeordneten Wulsts sich von den Merkmalen der Umfangsdrähte (12) der Verankerungszone (30) des der kürzeren Flanke (5) zugeordneten Wulsts unterscheidet.

7. Luftreifen nach Anspruch 1, bei dem die Verankerungszone des der längeren Flanke (6) zugeordneten Wulsts so im Wulst angeordnet ist, dass bei Normaldruck die Kräfte der Verstärkungsstruktur (2) sich im Wesentlichen gleichmäßig zu beiden Seiten der Struktur in der Verankerungszone (30) verteilen.

8. Luftreifen nach einem der Ansprüche 1 bis 7, bei dem die kürzere Flanke (5) dazu bestimmt ist, an der Innenseite des Fahrzeugs positioniert zu werden, und die längere Flanke (6) dazu bestimmt ist, an der Außenseite des Fahrzeugs positioniert zu werden.
